# EUROPEAN PATENT SPECIFICATION

(11) **EP 3 000 548 B1**
(45) Date of publication and mention of the grant of the patent: **10.11.2021**
(21) Application number: 14186557.6
(22) Date of filing: 26.09.2014
(51) Int. Cl.: B23C 5/20, B23C 5/22, B23C 5/06

(54) **Double-sided, square shoulder milling insert**
Doppelseitige, quadratische Schulterfräsplatte
Insert de fraisage à épaulement carré, double face

(43) Date of publication of application: 30.03.2016
(73) Proprietor: Seco Tools AB, 737 82 Fagersta (SE)
(72) Inventor: Hedberg, Stefan, 776 31 Hedemora (SE)
(74) Representative: Sandvik

(56) References cited:
- EP-A1- 2 559 509
- EP-A1- 2 764 940
- EP-A1- 2 774 706
- US-A1- 2013 115 022

## Description

### BACKGROUND AND SUMMARY

The present invention relates, generally, to double-sided, square shoulder milling inserts and, more particularly, to such inserts having a geometry facilitating mounting on a toolholder at a positive axial angle.

The structure of a typical double-sided, square shoulder milling insert makes it necessary to mount the insert on a toolholder with a negative axial angle. A disadvantage of mounting inserts at a negative axial angle is that substantial energy is necessary to perform a cutting operation with the insert oriented in this manner. The energy demands can be reduced by providing a rake surface geometry on the insert such that the angle defined by the rake and clearance surfaces of the insert at the cutting edge is less than 90 degrees, however, this weakens the cutting edge area and typically requires that a portion of the insert project well beyond the surface of the toolholder that supports the insert, increasing the risk of breakage of the milling insert.

Many solutions to the problem described above involve complex insert geometries, such as described in EP2774706A1 that shows the features of the preamble of claim 1.

It is desirable to provide a double-sided, square shoulder milling insert that can be mounted on a toolholder at a positive axial angle. It is further desirable to provide such an insert that provides for good support of a cutting edge of the insert by the insert and the toolholder.

In accordance with an aspect of the invention, a milling insert comprises a first generally rectangular surface that faces in a first direction, the first surface having four corners defining two identical major first edges and two identical minor first edges, a second generally rectangular surface identical to the first surface and facing in a second direction opposite the first direction, the second surface having four corners defining two identical major second edges and two identical minor second edges, a side surface extending between the first surface and the second surface, the side surface comprising four identical corner surfaces, two identical major side surfaces, and two identical minor side surfaces, each corner surface extending between a respective one of the four corners of the first surface and a respective one of the four corners of the second surface and defining therewith one cutting corner and one non-cutting corner, each major side surface extending between respective major first and second edges and defining therewith two major cutting edges at opposite ends of the major side surface, and each minor side surface extending between respective minor first and second edges and defining therewith two minor cutting edges at opposite ends of the minor side surface, four cutting edges, each cutting edge comprising a respective major cutting edge, cutting corner, and minor cutting edge, a central axis extends through the first surface and the second surface and intersects with and is perpendicular to the major axis and the minor axis, characterized in that, when each first and second major edge is viewed along the central axis, a first portion of each major side surface adjacent the first and second major cutting edges is disposed outward of the first and second major edge relative to the central axis with less of the first portion being disposed outwardly of the first and second major edge at the cutting corner than at the non-cutting corner.

### BRIEF DESCRIPTION OF THE DRAWINGS

The features and advantages of the present invention are well understood by reading the following detailed description in conjunction with the drawings in which like numerals indicate similar elements and in which:
FIG. 1A is a top, right side perspective view of an insert according to an aspect of the present invention;
FIG. 1B is a top, left side perspective view of the insert of FIG. 1A;
FIG. 1C is a bottom view of the insert of FIG. 1A;
FIG. ID is a left side view of the insert of FIG. 1A;
FIG. IE is a bottom end view of the insert of FIG. 1A;
FIG. 2A is a side view of a tool including an insert according to an aspect of the present invention;
FIG. 2B is a side view of the tool of FIG. 2B rotated 90 degrees around its axis;
FIG. 2C is a bottom view of the tool of FIG. 2A;
FIG. 3 is a schematic illustration showing the relative orientation of cutting edge portions of an insert according to an aspect of the present invention;
FIG. 4A is an enlarged view of a portion of FIG. 2B; and
FIG. 4B is an enlarged view of a portion of FIG. 2C.

### DETAILED DESCRIPTION

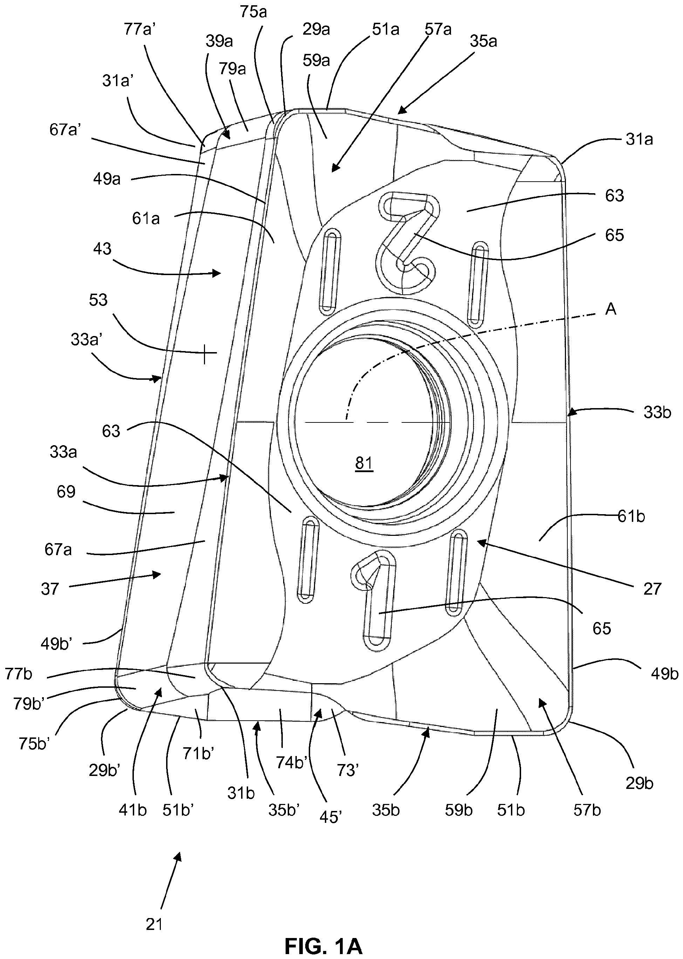

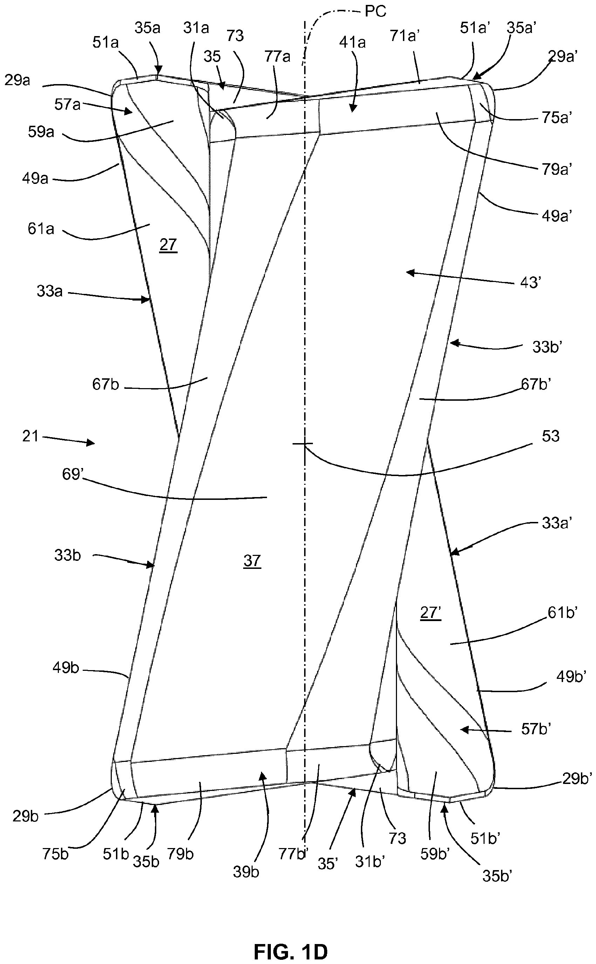

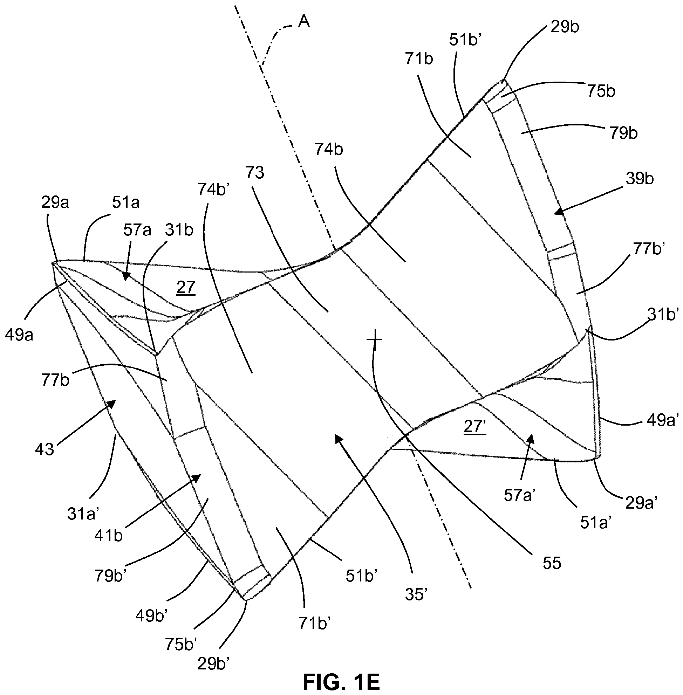

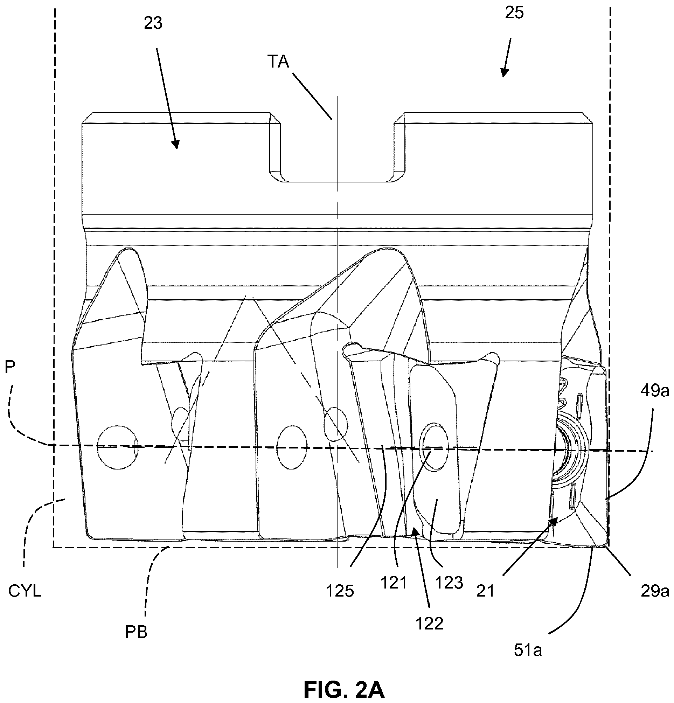

A milling insert 21 according to an embodiment of the present invention is shown in various views in FIGS. 1A-E. The milling insert 21 is mountable in a toolholder 23 to form a cutting tool 25 as seen in FIGS. 2A-2C. The insert 21 is ordinarily made of a material such as cemented carbide and the geometry thereof described herein can be provided by direct pressing or by grinding.

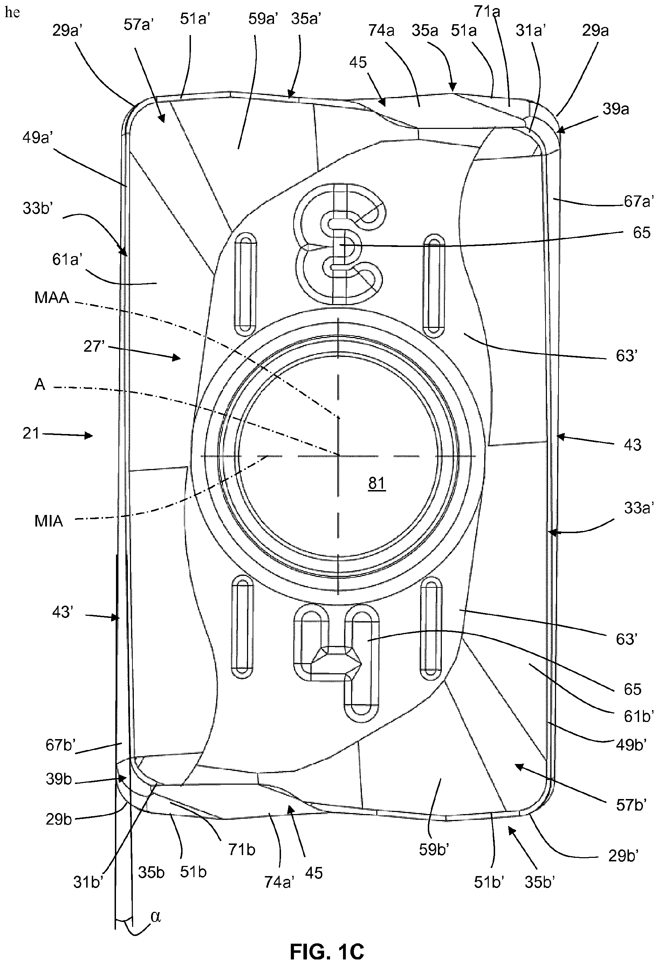

The insert 21 includes a first generally rectangular (at least when viewed along a central axis A of the insert) surface 27 that faces in a first direction. The first surface 27 has four corners 29a, 29b, 31a, and 31b defining two identical major first edges 33a and 33b and two identical minor first edges 35a and 35b. The terms "major" and "minor" refer to sizes, areas, lengths, etc. as perceived by the skilled person. A second generally rectangular surface 27' (as seen in FIG. 1C) is identical to the first surface and faces in a second direction opposite the first direction. The second surface 27' has four corners 29a', 29b', 31a', and 31b' defining two identical major first edges 33a' and 33b' and two identical minor first edges 35a' and 35b'. In the drawings, the first surface 27 has indicia "1" and "2" provided thereon, and the second surface 27' has indicia "3" and "4". Except where otherwise indicated, references to the first surface 27 can be understood to apply equally to the second surface 27'.

A side surface 37 extends between the first surface 27 and the second surface 27'. The side surface 37 comprises four identical corner surfaces, two of which, corner surfaces 39a and 39b, are identical to each other and two of which, corner surfaces 41a and 41b are identical to each other and to corner surfaces 39a and 39b, but upside down in appearance relative to the corner surfaces 39a and 39b. The side surface 37 comprises what shall be denominated as two identical major side surfaces 43 and 43'. The side surface 37 further comprises what shall be denominated as two identical minor side surfaces 45 and 45'. In the illustrated insert, the minor side surfaces 45 and 45' are shorter than the major side surfaces 43 and 43'.

Each corner surface 39a, 39b, 41a, and 41b extends between a respective one of the four corners 29a, 29b, 31a, and 31b of the first surface 27 and a respective one of the four corners 29a', 29b', 31a', and 31b' of the second surface 27'. The corners 29a, 29b, 29a' and 29b' are cutting corners, i.e., they define edges that are designed to perform cutting operations, and the corners 31a', 31b', 31a, and 31b are non-cutting corners.

Each major side surface 43 and 43' extends between respective major first and second edges 33a, 33a' and 33b, 33b', respectively, defining therewith two major cutting edges 49a, 49a' and 49b, 49b' at opposite ends of the major side surfaces. Each minor side surface 45 and 45' extends between respective minor first and second edges 35a, 35a' and 35b, 35b', respectively, and defines therewith two minor cutting edges 51a, 51a' and 51b, 51b' at opposite ends of the minor side surface 45 and 45', respectively.

The insert 21 has four cutting edges, each cutting edge comprising one respective major cutting edge 49a, 49b, 49a', or 49b', one cutting corner 45a, 45b, 45a', or 45b', and one minor cutting edge 51a, 51b, 51a', or 51b'. The insert 21 can be indexed to expose the cutting edges successively by rotating the insert 180 degrees about its central axis A or flipping it 180 degrees about the central axis.

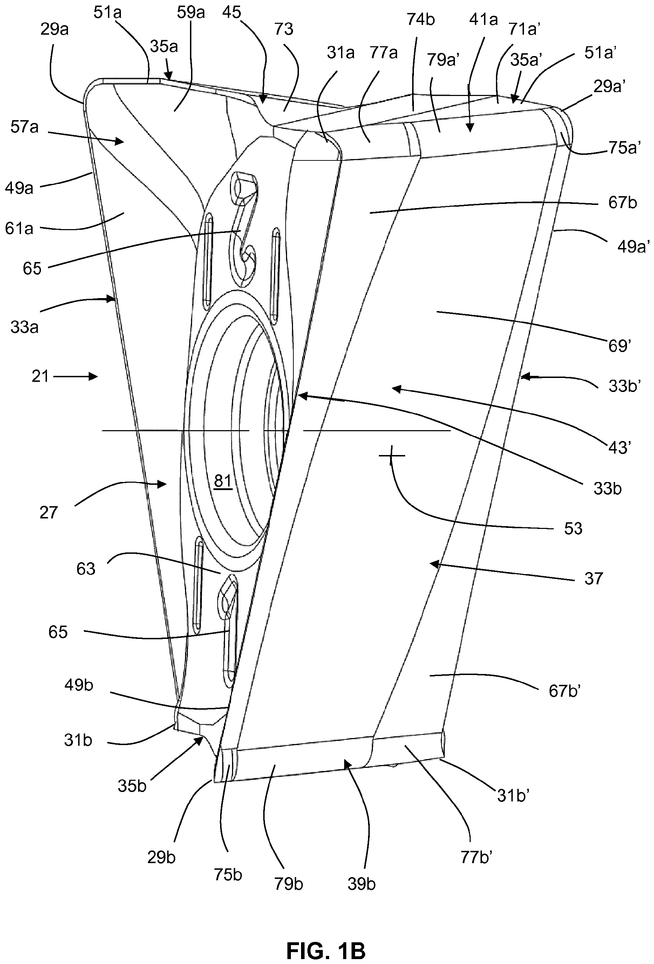

At least one tangent of each major cutting edge 49a, 49b, 49a', 49b' may in top view form an acute angle α (FIG. 1C) with the second or support portion 69 and 69'. The first portion 67a, 67b, 67a', 67b' of each major side surface 43, 43' may taper towards the cutting corner 29a, 29b, 29a', 29b' as seen for example in FIG. 1B.

A central plane PC (FIG. ID) of the insert 21 is defined by a major axis MAA (FIG. 1C) extending between centerpoints 53 (one only shown in FIGS. 1A-1B and ID) of the two major side surfaces 43 and 43' and a minor axis MIA (FIG. 1C) perpendicular to the major axis and extending between centerpoints 55 (one only shown in FIG. IE) of the two minor side surfaces 45 and 45'. The central axis A extends through the first surface 27 and the second surface 27' and intersects with and is perpendicular to the major axis MAA and the minor axis MIA. The first surface 27 and the second surface 27', while ordinarily not planar, can be considered to each have a plane that is parallel to a central plane CP defined by the major axis MAA and the minor axis MIA and to which the central axis A is perpendicular. Mounting surface portions 63 and 63' on the first surface 27 and the second surface 27' can be parallel to or lie in the planes of the first surface and the second surface.

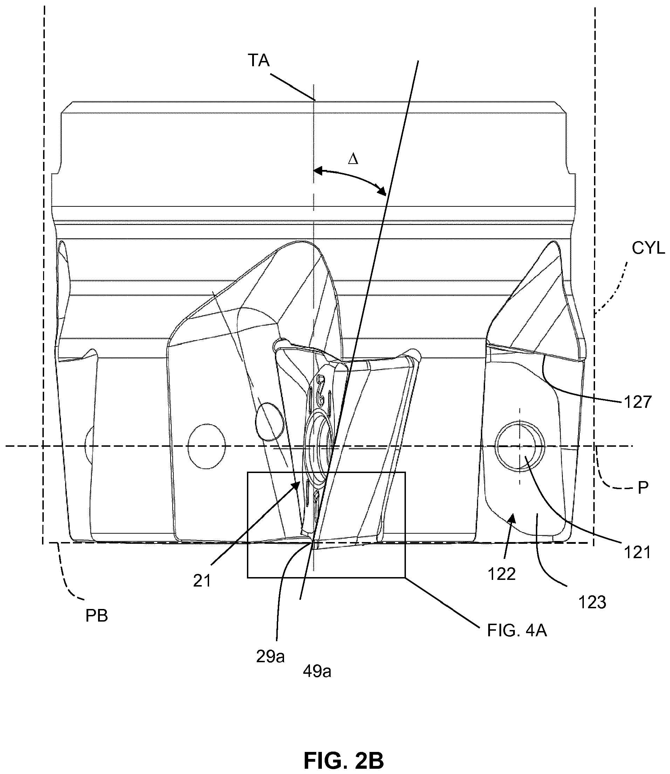

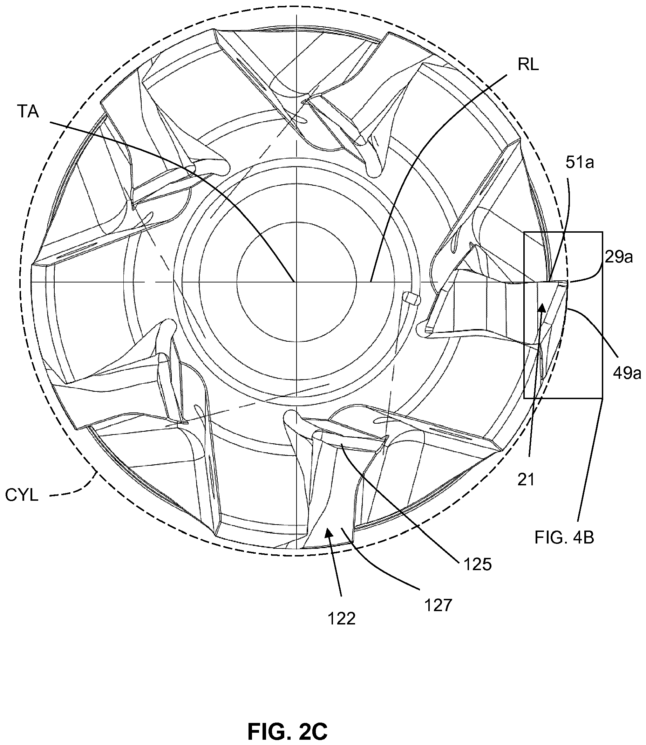

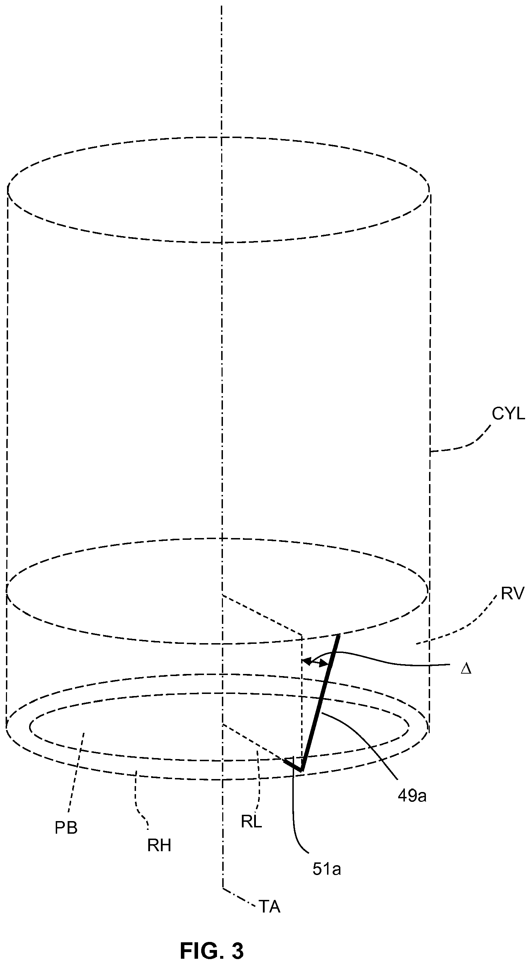

For any one of the cutting edges, the minor cutting edge lies 51, 51a', 51b, or 51b' lies substantially in a bottom plane PB (shown in phantom in FIGS. 2A-2B and 3) perpendicular to a plane P in which the central axis A lies. Also, for any one of the cutting edges, the major cutting edge 49a, 49a', 49b, or 49b' defines a non-zero angle with a plane defined by the minor axis MIA and the major axis MAA and lies on a surface of a circular cylinder CYL (shown in phantom in FIGS. 2A-3) that is perpendicular to the bottom plane. As a consequence of this structure, as seen in FIG. 3, when a the toolholder on which the insert 21 is mounted (as seen in FIGS. 2A-2C) is rotated about its central axis TA and the central axis A of the insert 21 perpendicular to the central axis TA of the toolholder, the minor cutting edge 51, 51a', 51b, or 51b' defines what shall be denominated as a horizontal circular ring RH (FIG. 3) that lies in the bottom plane PB and the major cutting edge 49a, 49a', 49b, or 49b' defines what shall be denominated as a vertical circular ring RV (FIG. 3) along the surface of the cylinder CYL. FIG. 3 shows only the edges 49a and 51a to illustrate the relative positioning of these features of the insert and their relationship to the cylinder CYL and bottom plane PB. As seen in FIGS. 2C and 3, the minor cutting edge 51, 51a', 51b, or 51b' can be positioned along a radial line RL extending from the central axis TA of the toolholder 23 and, as seen in FIG. 2B and 3, the major cutting edge 49a, 49a', 49b, or 49b' can be oriented at an angle Δ relative to a plane in which the radial line RL and the central axis TA lie.

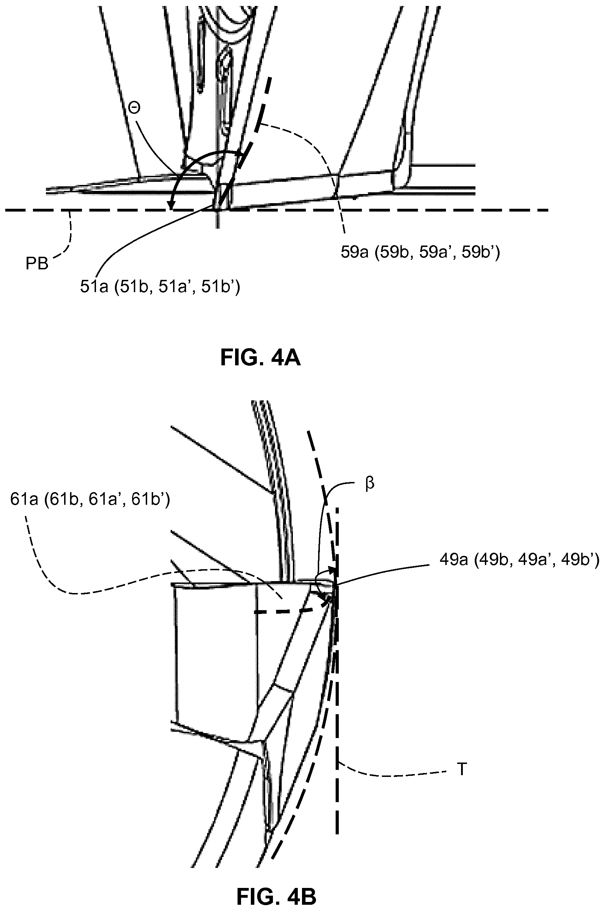

The first surface 27 and the second surface 27' each include rake surface portions 57a, 57b and 57a', 57b' adjacent the cutting edges. For any one of the cutting edges, the rake surface 59a, 59b, 59a', or 59b' (partially shown in phantom in FIG. 4A) adjacent the minor cutting edge 51a, 51b, 51a', or 51b' defines an obtuse angle Θ with the bottom plane PB in front of the minor cutting edge as seen in FIG. 4A. Similarly, the rake surface 61a, 61b, 61a', or 61b' (partially shown in phantom in FIG. 4B) adjacent the major cutting edge 49a, 49a', 49b, or 49b'defines an obtuse angle β with the tangent T to the circular cylinder in front of the major cutting edge.

The first surface 27 and the second surface 27' can each include mounting surface portions 63 and 63', respectively, of identical shape. The mounting surface portions 63 and 63' on the first and second surfaces 27 and 27' can be flat and parallel to each other. As seen in, e.g., FIGS. 1A and 1C, indicia 65 (here, numerals 1, 2, 3, and 4) can be provided on the mounting surface portions 63 and 63'. The indicia may be useful for, for example, servicing of a cutting tool such as by regularly indexing all milling inserts after a predetermined period of use so that a cutting edge corresponding to a particular indicia numeral is in a working position.

The major cutting edge 49a, 49a', 49b, or 49b' ordinarily defines a convex shape (in a bottom view such as FIG. 1C) to follow a curve of a cylindrical surface being machined. In a view according to FIG. ID the major cutting edge may define a concave, straight or other shape. The major side surface 43 and 43' comprises a first portion 67a, 67b and 67a', 67b'adjacent the major cutting edge 49a, 49b and 49a', 49b'. The first portion defines a clearance surface behind its associated cutting edge. A second portion 69 and 69' can be disposed between the first portion 67a and 67b and another first portion 67a' and 67b' adjacent another major cutting edge 49a' and 49b'. The first portion 67a, 67b, 67a', 67b' can be flat but it can be useful to provide a helical shape to the first portion to facilitate providing a sufficient clearance between the first portion and a workpiece being machined while also maintaining the clearance angle at the smallest possible size to provide better support for the adjacent major cutting edge. The second portion 69 and 69' can, likewise, be flat, although a helical shape can be provided. If the first portion 67a, 67b, 67a', 67b' is helical in shape, it can define range of angles with the central plane PC, and, if the second portion 69 and 69' is helical, it can define a range of angles with the central plane. If the first portion 67a, 67b, 67a', 67b' is flat in shape, it will ordinarily define a single angle with the central plane PC, and, if the second portion 69 and 69' is flat, it will ordinarily define a single angle with the central plane. As seen in FIG. 1C, when each first and second major edge 33a, 33b, 33a', 33b' is viewed along the central axis A, the first portion 67a, 67b, 67a', 67b' of each major side surface 43, 43', which first portion forms a clearance surface, is disposed outward of the first and second major edge 33a, 33b, 33a', 33b' relative to the central axis with less of the first portion being disposed outwardly of the first and second major edge at the cutting corner 29a, 29b, 29a', 29b' than at the non-cutting corner 31a, 31b, 31a', 31b'.

Each minor side surface 45 and 45' includes a first portion 71a, 71b, 71a', 71b' that is adjacent each minor cutting edge 51a, 51b, 51a', 51b'. The first portion 71a, 71b, 71a', 71b' of the minor side surface 45 and 45' can define an acute angle or (if provided with a helical shape) range of angles with a plane defined by the central axis A and the minor axis MIA. By such a shape, the first portion 71a, 71b, 71a', 71b' can define a clearance surface having a clearance angle or range of clearance angles below its adjacent minor cutting edge 51a, 51b, 51a', 51b'.

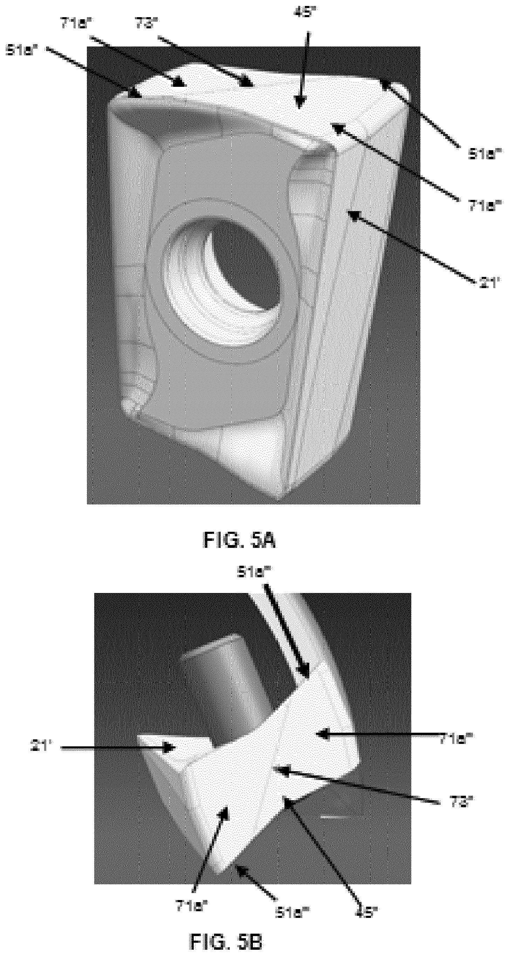

Each minor side surface 45 and 45' includes two identical halves arranged rotationally symmetrically on opposite sides of a central transition portion 73 and 73' of the minor side surface. As seen, for example, in FIG. IE, the transition portion extends in a straight line extending at a non-zero angle to the central axis A. Each minor side surface 45 and 45' can include two surfaces 74a, 74b and 74a', 74b' adjacent to and on opposite sides of the transition portion 73, 73'. Ordinarily, the two surfaces 74a, 74b and 74a', 74b' will define an angle of less than 180 degrees as seen in the embodiment shown in FIGS. 1A-1E. This structure makes the insert 21 particularly well suited for performing ramping operations. However, as seen in FIGS. 5A and 5B, an insert 21' with minor side surfaces 45" and minor cutting edges 51a", 51a'" can have first portions 71a", 71a"' that define an angle of greater than 180 degrees. The portions 71a" and 71a'" can gradually merge into each other or, as seen in FIGS. 5A and 5B, they may meet at a sharp transition line 73".

Each corner surface 39a, 39b, 41a, 41b includes a first curved portion 75a, 75b, 75a', 75b' adjacent one of the cutting corners 29a, 29b, 29a', 29b' and a second curved portion 77a, 77b, 77a', 77b' adjacent a corresponding one of the non-cutting corners 31a, 31b, 31a', 31b', the first curved portion and the second curved portion defining non-zero angles with each other (ordinarily obtuse when measured from surface to surface). A third curved portion 79a, 79b, 79a', 79b' can be disposed between the first curved portion 75a, 75b, 75a', 75b' and the second curved portion 77a', 77b', 77a, 77b at the corner surfaces 39a, 39b, 41a, 41b. When the insert 21 performs a cutting operation, the angled shapes of the corner surfaces 39a, 39b, 41a, and 41b provides a clearance angle between the workpiece and the first curved portion 75a, 75b, 75a', 75b' adjacent a working one of the cutting corners 29a, 29b, 29a', 29b'

A circular hole 81 ordinarily extends from the first surface 27 to the second surface 27' and is centered on the central axis A. The hole 81 facilitates mounting of the insert 21 using a screw or bolt that extends through the hole and mates with a threaded hole 121 in the toolholder 23.

The toolholder 23 will ordinarily have a plurality of recesses 122 formed therein for receiving the milling inserts 21. The recesses 122 will ordinarily include at three abutment surfaces that abut corresponding supporting surfaces of the insert 21. A bottom abutment surface 123 (FIGS. 2A and 2B) is provided for abutting a mounting surface portion 63 or 63'. The major cutting edge length has been maximized by making the insert rectangular, and thus the cutting depth can be increased as compared to a square insert for a given dimension. An increased cutting depth will increase forces on the insert and therefore it is beneficial to support the insert satisfactorily. For that reason the insert (and the milling cutter) has angled support surfaces that supports the insert as close to the active cutting corner as possible.

A major abutment surface 125 (FIGS. 2A and 2C) is provided for abutting the major side surface 43 or 43' (usually along the second portion 69 or 69'). A minor abutment surface 127 (FIG. 2C) is provided for abutting the minor side surface 45 or 45' (usually along the surfaces 74a, 74a', and 73 or 74b, 74b', and 73').

The bottom abutment surfaces 123 can be substantially parallel to the central axis TA of the toolholder 23. The threaded hole 121 can be substantially perpendicular to the central axis of the toolholder.

The configuration of the insert 21 thus described permits a double-sided, square shoulder insert to be mounted in a toolholder without having to mount it with a negative axial angle. The shape facilitates arranging cutting edges of the insert so that sharp edges are nonetheless well supported by the rest of the insert.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A double-sided milling insert (21, 21') comprising:
a first generally rectangular surface (27) that faces in a first direction, the first surface (27) having four corners (29a, 29b, 31a, 31b) defining two identical major first edges (33a, 33b) and two identical minor first edges (35a, 35b);
a second generally rectangular surface (27') identical to the first surface (27) and facing in a second direction opposite the first direction, the second surface (27') having four corners (29a', 29b', 31a', 31b') defining two identical major second edges (33a', 33b') and two identical minor second edges (35a', 35b');
a side surface (37) extending between the first surface (27) and the second surface (27'), the side surface (37) comprising four identical corner surfaces (39a, 39b, 41a, 41b), two identical major side surfaces (43, 43'), and two identical minor side surfaces (45, 45'), each corner surface extending between a respective one of the four corners (29a, 29b, 31a, 31b) of the first surface (27) and a respective one of the four corners (29a', 29b', 31a', 31b') of the second surface (27') and defining therewith one cutting corner (29a, 29b, 29a', 29b') and one non-cutting corner (31a, 31b, 31a', 31b'), each major side surface (43, 43') extending between respective major first and second edges (33a, 33a' and 33b, 33b') and defining therewith two major cutting edges (49a, 49a' and 49b, 49b') at opposite ends of the major side surface (43, 43'), and each minor side surface (45, 45') extending between respective minor first and second edges (35a, 35a' and 35b, 35b') and defining therewith two minor cutting edges (51a, 51a' and 51b, 51b') at opposite ends of the minor side surface (45, 45');
four cutting edges, each cutting edge comprising a respective major cutting edge (49a, 49b, 49a', 49b'), cutting corner (29a, 29b, 29a', 29b'), and minor cutting edge (51a, 51b, 51a', 51b'),
wherein a central axis (A) extends through the first surface (27) and the second surface (27') and intersects with and is perpendicular to planes of the first surface (27) and the second surface (27'),
**characterized in that**, when each first and second major edge (33a, 33b, 33a', 33b') is viewed along the central axis (A), a first portion (67a, 67b, 67a', 67b') of each major side surface (43, 43') adjacent the first and second major cutting edges (49a, 49a' and 49b, 49b') is disposed outward of the first and second major edge (33a, 33b, 33a', 33b') relative to the central axis (A) with less of the first portion (67a, 67b, 67a', 67b') being disposed outwardly of the first and second major edge (33a, 33b, 33a', 33b') at the cutting corner (29a, 29b, 29a', 29b') than at the non-cutting corner (31a, 31b, 31a', 31b').

2. The double-sided milling insert (21, 21') as set forth in claim 1, wherein the first surface (27) and the second surface (27') each include rake surface portions (59a, 61a; 59b, 61b; 59a', 61a'; 59b', 61b') adjacent the cutting edges, wherein, for any one of the cutting edges, the rake surface adjacent the minor cutting edge (51a, 51b, 51a', 51b') defines an obtuse angle (Θ) with the bottom plane (BP) in front of the minor cutting edge (51a, 51b, 51a', 51b').

3. The double-sided milling insert (21, 21') as set forth in any one of claims 1-2, wherein the first surface (27) and the second surface (27') each include rake surface portions (59a, 61a; 59b, 61b; 59a', 61a'; 59b', 61b') adjacent the cutting edges, wherein, for any one of the cutting edges, the rake surface adjacent the major cutting edge (49a, 49b, 49a', 49b') defines an obtuse angle (β) with the tangent to the circular cylinder in front of the major cutting edge (49a, 49b, 49a', 49b').

4. The double-sided milling insert (21, 21') as set forth in any one of claims 1-3, wherein the first surface (27) and the second surface (27') each include mounting surface portions (63 and 63') of identical shape.

5. The double-sided milling insert (21, 21') as set forth in claim 4, wherein the mounting surface portions (63 and 63') on the first and second surfaces (27 and 27') are flat and parallel to each other.

6. The double-sided milling insert (21, 21') as set forth in any of claims 1-5, wherein the major cutting edge (49a, 49b, 49a', 49b') defines a convex curve in a bottom view.

7. The double-sided milling insert (21, 21') as set forth in any of claims 1-6, wherein the first portion (67a, 67b, 67a', 67b') of each major side surface (43, 43') has a helically twisted shape.

8. The double-sided milling insert (21, 21') as set forth in any of claims 1-7, wherein each major side surface (43, 43') comprises the first portion (67a, 67b, 67a', 67b') adjacent each first and second major edge (33a, 33b, 33a', 33b'), and a second portion (69, 69') between each first portion adjacent one cutting edge and another first portion adjacent another major edge.

9. The double-sided milling insert (21, 21') as set forth in claim 8, wherein a central plane (CP) of the insert (21, 21') is defined by a major axis (MAA) extending between centerpoints (53) of the two major side surfaces (43, 43') and a minor axis (MIA) perpendicular to the major axis and extending between centerpoints (55) of the two minor side surfaces (45, 45'), and the first portion (67a, 67b, 67a', 67b') defines a first angle or range of angles with the central plane (CP), and the second portion (69, 69') defines a second angle or range of angles with the central plane (CP).

10. The double-sided milling insert (21, 21') as set forth in claim 9, wherein the second portion (69, 69') has a helically twisted shape.

11. The double-sided milling insert (21, 21') as set forth in any of claims 1-10, wherein, for each minor side surface (45, 45'), a first portion (71a, 71b, 71a', 71b') of the minor side surface is adjacent each minor first and second edge (35a, 35a' and 35b, 35b'), the first portion of the minor side surface (71a, 71b, 71a', 71b') defining an acute angle or range of angles with the plane defined by the central axis (A) and the major axis (MAA).

12. The double-sided milling insert (21, 21') as set forth in any of claims 1-11, wherein each minor side (45, 45') surface includes two identical halves arranged rotationally symmetrically on opposite sides of a central transition portion (73, 73') of the minor side surface.

13. The double-sided milling insert (21, 21') as set forth in claim 12, wherein the transition portion (73, 73') extends in a straight line extending at a non-zero angle to the central axis (A).

14. The double-sided milling insert (21, 21') as set forth in any of claims 1-13, wherein each corner surface (39a, 39b, 41a, 41b) includes a first curved portion (75a, 75b, 75a, 75b') adjacent one of the cutting corners (29a, 29b, 29a', 29b') and a second curved portion (77a, 77b, 77a', 77b') adjacent a corresponding one of the non-cutting corners (31a, 31b, 31a', 31b'), the first curved portion and the second curved portion defining non-zero angles with each other.

15. The double-sided milling insert (21, 21') as set forth in any one of claims 1-14, wherein, for any one of the cutting edges,
the minor cutting edge (51a, 51b, 51a', 51b') lies in a bottom plane (BP) perpendicular to a plane (P) in which the central axis (A) lies, and
the major cutting edge (49a, 49b, 49a', 49b') defines a non-zero angle with the planes of the first surface (27) and the second surface (27') and lies on a surface of a circular cylinder (CYL) that is perpendicular to the bottom plane (BP).

16. The double-sided milling insert (21, 21') as set forth in any one of claims 1-15, wherein the first portion (67a, 67b, 67a', 67b') of each major side surface (43, 43') tapers towards the cutting corner (29a, 29b, 29a', 29b').

## Patentansprüche

1. Doppelseitiger Fräseinsatz (21, 21'), umfassend:
eine erste im Allgemeinen rechteckige Fläche (27), die in eine erste Richtung weist, wobei die erste Fläche (27) vier Ecken (29a, 29b, 31a, 31b) aufweist, die zwei identische erste Hauptkanten (33a, 33b) und zwei identische erste Nebenkanten (35a, 35b) definieren,
eine zweite im Allgemeinen rechteckige Fläche (27'), die mit der ersten Fläche (27) identisch ist und in eine zweite Richtung entgegengesetzt zur ersten Richtung weist, wobei die zweite Fläche (27') vier Ecken (29a', 29b', 31a', 31b') aufweist, die zwei identische zweite Hauptkanten (33a', 33b') und zwei identische zweite Nebenkanten (35a', 35b') definieren,
eine Seitenfläche (37), die sich zwischen der ersten Fläche (27) und der zweiten Fläche (27') erstreckt, wobei die Seitenfläche (37) vier identische Eckflächen (39a, 39b, 41a, 41b), zwei identische Hauptseitenflächen (43, 43') und zwei identische Nebenseitenflächen (45, 45') umfasst, wobei sich jede Eckfläche zwischen einer jeweiligen der vier Ecken (29a, 29b, 31a, 31b) der ersten Fläche (27) und einer jeweiligen der vier Ecken (29a', 29b', 31a', 31b') der zweiten Fläche (27') erstreckt und damit eine Schneidecke (29a, 29b, 29a', 29b') und eine Nicht-Schneidecke (31a, 31b, 31a', 31b') definiert, wobei sich jede Hauptseitenfläche (43, 43') zwischen jeweiligen ersten und zweiten Hauptkanten (33a, 33a' und 33b, 33b') erstreckt und damit zwei Hauptschneidkanten (49a, 49a' und 49b, 49b') an gegenüberliegenden Enden der Hauptseitenfläche (43, 43') definiert, und wobei sich jede Nebenseitenfläche (45, 45') zwischen der jeweiligen ersten und zweiten Nebenkante (35a, 35a' und 35b, 35b') erstreckt und damit zwei Nebenschneidkanten (51a, 51a' und 51b, 51b') an gegenüberliegenden Enden der kleineren Seitenfläche (45, 45') definiert,
vier Schneidkanten, wobei jede Schneidkante eine jeweilige Hauptschneidkante (49a, 49b, 49a', 49b'), eine Schneidecke (29a, 29b, 29a', 29b') und eine Nebenschneidkante (51a, 51b, 51a', 51b') umfasst,
wobei sich eine zentrale Achse (A) durch die erste Oberfläche (27) und die zweite Oberfläche (27') erstreckt und sich mit Ebenen der ersten Oberfläche (27) und der zweiten Oberfläche (27') schneidet und senkrecht zu diesen ist,
**dadurch gekennzeichnet, dass,** wenn jede erste und zweite Hauptkante (33a, 33b, 33a', 33b') entlang der Mittelachse (A) betrachtet wird, ein erster Abschnitt (67a, 67b, 67a', 67b') jeder Hauptseitenfläche (43, 43'), der an die erste und zweite Hauptschneidkante (49a, 49a' und 49b, 49b') angrenzt, relativ zur Mittelachse (A) außerhalb der ersten und zweiten Hauptschneidkante (33a, 33b, 33a', 33b')angeordnet ist, wobei vom ersten Abschnitt (67a, 67b, 67a', 67b') an der Schneidecke (29a, 29b, 29a', 29b') weniger außerhalb der ersten und zweiten Hauptschneidkante (33a, 33b, 33a', 33b') angeordnet ist als an der Nicht-Schneidecke (31a, 31b, 31a', 31b').

2. Doppelseitiger Fräseinsatz (21, 21') nach Anspruch 1, wobei die erste Oberfläche (27) und die zweite Oberfläche (27') jeweils Spanflächenabschnitte (59a, 61a; 59b, 61b; 59a', 61a'; 61b') benachbart zu den Schneidkanten aufweisen, wobei bei jeder der Schneidkanten die Spanfläche benachbart zu der Nebenschneidkante (51a, 51b, 51a', 51b') mit der Bodenebene (BP) vor der Nebenschneidkante (51a, 51b, 51a', 51b') einen stumpfen Winkel (θ) definiert.

3. Doppelseitiger Fräseinsatz (21, 21') nach einem der Ansprüche 1 bis 2, wobei die erste Oberfläche (27) und die zweite Oberfläche (27') jeweils Spanflächenabschnitte (59a, 61a; 59b, 61b; 59a', 61a'; 59b', 61b') benachbart zu den Schneidkanten aufweisen, wobei bei jeder der Schneidkanten die Spanfläche benachbart zu der Hauptschneidkante (49a, 49b, 49a', 49b') mit der Tangente am Kreiszylinder vor der Hauptschneidkante (49a, 49b, 49a', 49b') einen stumpfen Winkel (β) bildet.

4. Doppelseitiger Fräseinsatz (21, 21') nach einem der Ansprüche 1 bis 3, wobei die erste Fläche (27) und die zweite Fläche (27') jeweils gleich geformte Befestigungsflächenabschnitte (63 und 63') aufweisen.

5. Doppelseitiger Fräseinsatz (21, 21') nach Anspruch 4, wobei die Befestigungsflächenabschnitte (63 und 63') auf der ersten und zweiten Fläche (27 und 27') eben und parallel zueinander sind.

6. Doppelseitiger Fräseinsatz (21, 21') nach einem der Ansprüche 1 bis 5, wobei die Hauptschneide (49a, 49b, 49a', 49b') in einer Ansicht von unten eine konvexe Kurve definiert.

7. Doppelseitiger Fräseinsatz (21, 21') nach einem der Ansprüche 1 bis 6, wobei der erste Abschnitt (67a, 67b, 67a', 67b') jeder Hauptseitenfläche (43, 43') eine spiralförmig verdrehte Form aufweist.

8. Doppelseitiger Fräseinsatz (21, 21') nach einem der Ansprüche 1-7, wobei jede Hauptseitenfläche (43, 43') den ersten Abschnitt (67a, 67b, 67a', 67b') angrenzend an jede erste und zweite Hauptkante (33a, 33b, 33a', 33b') und einen zweiten Abschnitt (69, 69') zwischen jedem ersten Abschnitt angrenzend an eine Schneidkante und einen weiteren ersten Abschnitt angrenzend an eine andere Hauptkante aufweist.

9. Doppelseitiger Fräseinsatz (21, 21') nach Anspruch 8, wobei eine zentrale Ebene (CP) des Einsatzes (21, 21') durch eine Hauptachse (MAA), die sich zwischen den Mittelpunkten (53) der beiden Hauptseitenflächen (43, 43') erstreckt, und eine Nebenachse (MIA), die senkrecht zur Hauptachse verläuft und sich zwischen den Mittelpunkten (55) der beiden Nebenseitenflächen (45, 45') erstreckt, definiert ist, und wobei der erste Abschnitt (67a, 67b, 67a', 67b') einen ersten Winkel oder einen Bereich von Winkeln mit der Zentralebene (CP) definiert, und der zweite Abschnitt (69, 69') einen zweiten Winkel oder einen Bereich von Winkeln mit der Zentralebene (CP) definiert.

10. Doppelseitiger Fräseinsatz (21, 21') nach Anspruch 9, wobei der zweite Abschnitt (69, 69') eine schraubenförmig verdrehte Form aufweist.

11. Doppelseitiger Fräseinsatz (21, 21') nach einem der Ansprüche 1-10, wobei bei jeder Nebenseitenfläche (45, 45') ein erster Abschnitt (71a, 71b, 71a', 71b') der Nebenseitenfläche zu jeder ersten und zweiten Nebenkante (35a, 35a' und 35b, 35b') benachbart ist, wobei der erste Abschnitt der Nebenseitenfläche (71a, 71b, 71a', 71b') einen spitzen Winkel oder einen Bereich von Winkeln mit der durch die Mittelachse (A) und die Hauptachse (MAA) definierten Ebene definiert.

12. Doppelseitiger Fräseinsatz (21, 21') nach einem der Ansprüche 1-11, wobei jede Nebenseitenfläche (45, 45') zwei identische Hälften aufweist, die rotationssymmetrisch auf gegenüberliegenden Seiten eines zentralen Übergangsbereichs (73, 73') der Nebenseitenfläche angeordnet sind.

13. Doppelseitiger Fräseinsatz (21, 21') nach Anspruch 12, wobei sich der Übergangsbereich (73, 73') in einer geraden Linie erstreckt, die in einem von Null verschiedenen Winkel zur Mittelachse (A) verläuft.

14. Doppelseitiger Fräseinsatz (21, 21') nach einem der Ansprüche 1-13, wobei jede Eckfläche (39a, 39b, 41a, 41b) einen ersten gekrümmten Abschnitt (75a, 75b, 75a', 75b') benachbart zu einer der Schneidecken (29a, 29b, 29a', 29a, 29b, 29a', 29b') und einen zweiten gekrümmten Abschnitt (77a, 77b, 77a', 77b') angrenzend an eine entsprechende der Nicht-Schneidecken (31a, 31b, 31a', 31b') aufweist, wobei der erste gekrümmte Abschnitt und der zweite gekrümmte Abschnitt Nicht-Null-Winkel miteinander definieren.

15. Doppelseitiger Fräseinsatz (21, 21') nach einem der Ansprüche 1-14, wobei für jede der Schneidkanten
die Nebenschneidkante (51a, 51b, 51a', 51b') in einer Bodenebene (BP) senkrecht zu einer Ebene (P) liegt, in der die Mittelachse (A) liegt, und
die Hauptschneidkante (49a, 49b, 49a', 49b') einen von Null verschiedenen Winkel mit den Ebenen der ersten Oberfläche (27) und der zweiten Oberfläche (27') definiert und auf einer Oberfläche eines Kreiszylinders (CYL) liegt, die senkrecht zu der Bodenebene (BP) ist.

16. Doppelseitiger Fräseinsatz (21, 21') nach einem der Ansprüche 1-15, wobei sich der erste Abschnitt (67a, 67b, 67a', 67b') jeder Hauptseitenfläche (43, 43') zur Schneidecke (29a, 29b, 29a', 29b') hin verjüngt.

## Revendications

1. Plaquette de fraisage double face (21, 21') comprenant :
une première surface globalement rectangulaire (27) qui est orientée dans un premier sens, la première surface (27) présentant quatre coins (29a, 29b, 31a, 31b) définissant deux premières arêtes principales identiques (33a, 33b) et deux premières arêtes secondaires identiques (35a, 35b) ;
une seconde surface globalement rectangulaire (27') identique à la première surface (27) et orientée dans un second sens opposé au premier sens, la seconde surface (27') présentant quatre coins (29a', 29b', 31a', 31b') définissant deux secondes arêtes principales identiques (33a', 33b') et deux secondes arêtes secondaires identiques (35a', 35b') ;
une surface latérale (37) s'étendant entre la première surface (27) et la seconde surface (27'), la surface latérale (37) comprenant quatre surfaces de coin identiques (39a, 39b, 41a, 41b), deux surfaces latérales principales identiques (43, 43'), et deux surfaces latérales secondaires identiques (45, 45'), chaque surface de coin s'étendant entre un coin respectif parmi les quatre coins (29a, 29b, 31a, 31b) de la première surface (27) et un coin respectif parmi les quatre coins (29a', 29b', 31a', 31b') de la seconde surface (27') et définissant ensemble un coin de coupe (29a, 29b, 29a', 29b') et un coin de non-coupe (31a, 31b, 31a', 31b'), chaque surface latérale principale (43, 43') s'étendant entre des première et seconde arêtes principales respectives (33a, 33a' et 33b, 33b') et définissant ensemble deux arêtes de coupe principales (49a, 49a' et 49b, 49b') à des extrémités opposées de la surface latérale principale (43, 43'), et chaque surface latérale secondaire (45, 45') s'étendant entre des première et seconde arêtes secondaires respectives (35a, 35a' et 35b, 35b') et définissant ensemble deux arêtes de coupe secondaires (51a, 51a' et 51b, 51b') à des extrémités opposées de la surface latérale secondaire (45, 45') ;
quatre arêtes de coupe, chaque arête de coupe comprenant une arête de coupe principale (49a, 49b, 49a', 49b'), un coin de coupe (29a, 29b, 29a', 29b'), et une arête de coupe secondaire (51a, 51b, 51a', 51b') respectifs,
où un axe central (A) s'étend au travers de la première surface (27) et de la seconde surface (27') et coupe et est perpendiculaire à des plans de la première surface (27) et de la seconde surface (27'),
**caractérisée en ce que**, lorsque chaque première et seconde arête principale (33a, 33b, 33a', 33b') est observée le long de l'axe central (A), une première portion (67a, 67b, 67a', 67b') de chaque surface latérale principale (43, 43') adjacente aux premières et secondes arêtes de coupe principales (49a, 49a' et 49b, 49b') est disposée à l'extérieur des premières et secondes arêtes principales (33a, 33b, 33a', 33b') par rapport à l'axe central (A), une moindre proportion de la première portion (67a, 67b, 67a', 67b') étant disposée à l'extérieur des premières et secondes arêtes principales (33a, 33b, 33a', 33b') au niveau du coin de coupe (29a, 29b, 29a', 29b') par rapport au coin de non-coupe (31a, 31b, 31a', 31b').

2. Plaquette de fraisage double face (21, 21') selon la revendication 1, dans laquelle la première surface (27) et la seconde surface (27') incluent chacune des portions de surface de dépouille (59a, 61a; 59b, 61b ; 59a', 61a' ; 59b', 61b') adjacentes aux arêtes de coupe, où, pour l'une quelconque des arêtes de coupe, la surface de dépouille adjacente à l'arête de coupe secondaire (51a, 51b, 51a', 51b') définit un angle obtus (Θ) avec le plan inférieur (BP) devant l'arête de coupe secondaire (51a, 51b, 51a', 51b').

3. Plaquette de fraisage double face (21, 21') selon l'une quelconque des revendications 1 et 2, dans laquelle la première surface (27) et la seconde surface (27') incluent chacune des portions de surface de dépouille (59a, 61a; 59b, 61b ; 59a', 61a' ; 59b', 61b') adjacentes aux arêtes de coupe, où, pour l'une quelconque des arêtes de coupe, la surface de dépouille adjacente à l'arête de coupe principale (49a, 49b, 49a', 49b') définit un angle obtus (β) avec la tangente au cylindre circulaire devant l'arête de coupe principale (49a, 49b, 49a', 49b').

4. Plaquette de fraisage double face (21, 21') selon l'une quelconque des revendications 1 à 3, dans laquelle la première surface (27) et la seconde surface (27') incluent chacune des portions de surface de montage (63 et 63') de forme identique.

5. Plaquette de fraisage double face (21, 21') selon la revendication 4, dans laquelle les portions de surface de montage (63 et 63') sur les première et seconde surfaces (27 et 27') sont planes et parallèles l'une par rapport à l'autre.

6. Plaquette de fraisage double face (21, 21') selon l'une quelconque des revendications 1 à 5, dans laquelle l'arête de coupe principale (49a, 49b, 49a', 49b') définit une courbe convexe selon une vue de dessous.

7. Plaquette de fraisage double face (21, 21') selon l'une quelconque des revendications 1 à 6, dans laquelle la première portion (67a, 67b, 67a', 67b') de chaque surface latérale principale (43, 43') présente une forme enroulée hélicoïdalement.

8. Plaquette de fraisage double face (21, 21') selon l'une quelconque des revendications 1 à 7, dans laquelle chaque surface latérale principale (43, 43') comprend la première portion (67a, 67b, 67a', 67b') adjacente à chaque première et seconde arête principale (33a, 33b, 33a', 33b'), et une seconde portion (69, 69') entre chaque première portion adjacente à une arête de coupe et une autre première portion adjacente à une autre arête principale.

9. Plaquette de fraisage double face (21, 21') selon la revendication 8, dans laquelle un plan central (CP) de la plaquette (21, 21') est défini par un axe principal (MAA) s'étendant entre des points centraux (53) des deux surfaces latérales principales (43, 43') et un axe secondaire (MIA) perpendiculaire à l'axe principal et s'étendant entre des points centraux (55) des deux surfaces latérales secondaires (45, 45'), et la première portion (67a, 67b, 67a', 67b') définit un premier angle ou une première plage d'angles avec le plan central (CP), et la seconde portion (69, 69') définit un second angle ou une seconde plage d'angles avec le plan central (CP).

10. Plaquette de fraisage double face (21, 21') selon la revendication 9, dans laquelle la seconde portion (69, 69') présente une forme enroulée hélicoïdalement.

11. Plaquette de fraisage double face (21, 21') selon l'une quelconque des revendications 1 à 10, dans laquelle, pour chaque surface latérale secondaire (45, 45'), une première portion (71a, 71b, 71a', 71b') de la surface latérale secondaire est adjacente à chaque première et seconde arête secondaire (35a, 35a' et 35b, 35b'), la première portion de la surface latérale secondaire (71a, 71b, 71a', 71b') définissant un angle aigu ou une plage d'angles aigus avec le plan défini par l'axe central (A) et l'axe principal (MAA).

12. Plaquette de fraisage double face (21, 21') selon l'une quelconque des revendications 1 à 11, dans laquelle chaque surface latérale secondaire (45, 45') inclut deux moitiés identiques agencées de manière symétrique par rotation sur des côtés opposés d'une portion de transition centrale (73, 73') de la surface latérale secondaire.

13. Plaquette de fraisage double face (21, 21') selon la revendication 12, dans laquelle la portion de transition (73, 73') s'étend en ligne droite selon un angle non nul par rapport à l'axe central (A).

14. Plaquette de fraisage double face (21, 21') selon l'une quelconque des revendications 1 à 13, dans laquelle chaque surface de coin (39a, 39b, 41a, 41b) inclut une première portion incurvée (75a, 75b, 75a', 75b') adjacente à l'un des coins de coupe (29a, 29b, 29a', 29b') et une seconde portion incurvée (77a, 77b, 77a', 77b') adjacente à un coin correspondant parmi les coins de non-coupe (31a, 31b, 31a', 31b'), la première portion incurvée et la seconde portion incurvée définissant des angles non nuls l'une par rapport à l'autre.

15. Plaquette de fraisage double face (21, 21') selon l'une quelconque des revendications 1 à 14, dans laquelle, pour l'une quelconque des arêtes de coupe,
l'arête de coupe secondaire (51a, 51b, 51a', 51b') se situe dans un plan inférieur (BP) perpendiculaire à un plan (P) dans lequel se trouve l'axe central (A), et
l'arête de coupe principale (49a, 49b, 49a', 49b') définit un angle non nul avec les plans de la première surface (27) et de la seconde surface (27') et se trouve sur une surface d'un cylindre circulaire (CYL) qui est perpendiculaire au plan inférieur (BP).

16. Plaquette de fraisage double face (21, 21') selon l'une quelconque des revendications 1 à 15, dans laquelle la première portion (67a, 67b, 67a', 67b') de chaque surface latérale principale (43, 43') s'effile en direction du coin de coupe (29a, 29b, 29a', 29b').
